# EUROPEAN PATENT APPLICATION

(11) **EP 4 520 761 A1**
(43) Date of publication of application: **12.03.2025**
(21) Application number: 23799324.1
(22) Date of filing: 14.04.2023
(51) Int. Cl.: C07F 7/18, D06M 13/513, C04B 41/49

(54) **PRODUCT WITH REVERSIBLE WATER-REPELLENT OR SUPER WATER-REPELLENT PROPERTIES FOR COATING POROUS TEXTILE AND CERAMIC MATERIALS**

(30) Priority: 05.05.2022 ES 202230407
(71) Applicant: Universidad de Cádiz, 11003 Cádiz (ES)
(72) Inventor: ZARZUELA SÁNCHEZ, Rafael, 11519 Puerto Real (Cádiz) (ES); PORRAS-KETTERER ROMERO, José Carlos, 11519 Puerto Real (Cadíz) (ES); MOSQUERA DÍAZ, María Jesús, 11519 Puerto Real (Cádiz) (ES); GIL MONTERO, Almoraima, 11519 Puerto Real (Cádiz) (ES)
(74) Representative: Pons
(86) International application number: PCT/ES2023/070235
(87) International publication number: WO 2023/214100

(57) **Abstract**

The present invention relates to a product specifically designed to coat porous textile and ceramic materials, which provides the material with a combination of hydrophobic properties and which can also be reversed, in response to variations in pH or the presence of transition metal cations, by means of a mechanism of induced hydrophilia that generates oil repellence upon contact with water, hereby facilitating the removal of any stain deposited on the surface of the material, while maintaining a protective effect against water and water-soluble agents. The product is also designed to reduce bioreceptivity by means of subsequent treatment with metal cations with proven biocidal effect, and to be used in other potential applications such as the generation of filtering fabrics for the separation of water/oil mixtures.

## Description

### TECHNICAL SECTOR

The present invention relates to a product designed to coat porous textile and ceramic materials, which provides the material with reversible hydrophobia through a mechanism of induced hydrophilia, by means of the effect of variations in pH or ion exchange which generates oil repellence upon contact with water, and which is capable, after treatment with Cu²⁺, Ag⁺ and/or Zn²⁺ salts, of providing the treated surface with antimicrobial properties.

### BACKGROUND OF THE INVENTION

An effective strategy for providing materials with new functionalities constitutes the application of treatments capable of modifying their surface. Nowadays, the production of smart treatments has attracted the interest of the scientific community; a smart surface or material can be defined as one capable of modifying its properties dynamically and reversibly in response to external stimuli *(*Yoshida, M. & Lahann, J. Smart nanomaterials. ACS Nano 2, 1101-1107 (2008*)).* These modified surfaces can provide a response adapted to the needs in dependence of a variety of stimuli: variations in pH or temperature; exposure to radiation or magnetic fields; ion capture; gas adsorption, etc.

The typology of properties sought to be modified is very diverse, as are the stimuli to which these synthetic surfaces respond. Specifically, obtaining surface treatments capable of modifying the wetting properties of materials, being able to reversibly switch between hydrophobia and hydrophilia, in response to different external stimuli, is particularly interesting. This quality adds new and additional functionalities to surfaces, such as: (1) oil-repellent properties when immersed under water, which allow oily stains to be more easily removed; (2) compatibility with other water-based treatments (paints, cleaning solutions, etc.) and (3) the ability to modify bioreceptivity by altering surface-microorganism interaction forces.

While the research and development of smart materials began more than two decades ago, the application of these products as surface treatments to provide surfaces with new functionalities has become more and more important nowadays. In order to obtain surfaces with a reversible response in their wetting properties, some of the strategies observed in recent literature address the use of functionalised nanoparticles *(*Xu, X., Li, M., Li, X. & Zhang, L. Fabricated smart sponge with switchable wettability and photocatalytic response for controllable oil-water separation and pollutants removal. J. Ind. Eng. Chem. 92, 278-286 (2020*);* Wang, F. et al. Highly-efficient separation of oil and water enabled by a silica nanoparticle coating with pH-triggered tunable surface wettability. J. Colloid Interface Sci. 557, 65-75 (2019*))* with functional groups of various kinds, such as carboxylic, amino and hydroxyl groups, which promote a phenomenon of induced hydrophilia in response to variations in pH.

The present invention constitutes a rapid method, with reduced treatment and curing times, applicable to large or small surfaces by common methods, such as: immersion, spraying, brush or roller, among others. For this purpose, aminoalkyl alkoxysilane products with amino groups are used, which, by protonation and deprotonation, can establish pH balances and modify the influence of an organically modified silica hydrophobic matrix, based on alkoxysilanes, in a reversible manner. Likewise, these functional groups are capable of complexing metal cations, such as: copper, silver or zinc which, in addition to modifying the wetting properties of the surface in a reversible manner by means of a metallic complex formation equilibrium, have a proven biocidal activity *(*Kakakhel, M. A. et al. Controlling biodeterioration of cultural heritage objects with biocides: A review. Int. Biodeterior. Biodegrad. 143, 104721 (2019*)),* effectively decreasing the bioreceptivity of the treated surfaces.

Materials with biocidal activity, or low bioreceptivity, that passively reduce the microbial load on their surfaces are vitally important assets in specific environments, such as: hospitals, in order to avoid nosocomial infections; urban or infrastructure, creating construction materials free of colonisation and biodeterioration; nautical, with the aim of avoiding the formation of biofilms; or others such as cultural heritage, for its protection and conservation.

The use of alkoxysilane-based products for the treatment of building materials is widespread due to their ability to penetrate the porous structure of these materials and polymerise *in situ* by means of a sol-gel route, reducing surface energy and providing water-repellent properties *(*Carrascosa, L. A. M., Zarzuela, R., Badreldin, N. & Mosquera, M. J. A Simple, Long-Lasting Treatment for Concrete by Combining Hydrophobic Performance with a Photoinduced Superhydrophilic Surface for Easy Removal of Oil Pollutants. ACS Appl. Mater. Interfaces 12, 19974-19987 (2020*)).* They also have an important compatibility with textile materials, such as polyester or cotton, the product interacting with the fibres of the fabric by means of mainly weak interaction forces, such as hydrogen bonds, or even copolymerising in the structure *(*Boukhriss, A. et al. Sol-gel based water repellent coatings for textiles. doi:10.1007/s10570-015-0565-7).

### DESCRIPTION OF THE INVENTION

The present invention relates to a product specifically designed to coat porous textile and ceramic materials, which provides the material with a combination of hydrophobic properties and which can also be reversed, in response to variations in pH or the presence of transition metal cations, by means of a mechanism of induced hydrophilia that generates oil repellence upon contact with water, hereby facilitating the removal of any stain deposited on the surface of the material, while maintaining a protective effect against water and water-soluble agents. The product is also designed to reduce bioreceptivity by means of subsequent treatment with metal cations with proven biocidal effect, and to be used in other potential applications such as the fabrication of fabric filters for the separation of water/oil mixtures.

A first aspect of the invention relates to a sol comprising:
(i) A short-chain alcohol (1 to 5 carbons), preferably 2-propanol, having a proportion, which should be kept between 50 and 90% vol/vol to maintain miscibility and not alter the effectiveness of the treatment, which may be modified in order to alter any of the properties of the product, such as the stability, viscosity or thickness of the coating in specific applications.
(ii) An alkylalkoxysilane with an aliphatic chain of between 3 and 20 carbons (at a concentration between 3.0 and 12.0% vol/vol), which reduces the surface energy of the coating and produces hydrophobic behaviour.
(iii) A compound with amino functional groups, using aminoalkyl alkoxysilane products, with a chain containing between 3 and 10 carbons and 1-4 nitrogens at an N:C ratio of at least 1:3, included as part of the product formulation, with at least a 5% vol/vol proportion.
(iv) A non-ionic surfactant (with a concentration between 0.2 and 1.0% vol/vol). The non-ionic surfactant is a primary amine, preferably n-octylamine. Its function is to act as a basic catalyst for the sol-gel reaction.
(v) Silicon dioxide particles, between 0.1 and 1% weight/volume, in the case of wanting to provide the surface with a surface roughness that accentuates the wetting properties in its superhydrophobic (defined by contact angles >150° and water sliding at an inclination of less than 10°) or superhydrophilic (defined by contact angles <10°) character. These nanoparticles, with a size between 10 and 200 nm, can be functionalised with hydrophobic alkyl groups and/or amino-terminal groups in order to regulate wetting properties and/or pH sensitivity.

In a preferred embodiment, the short-chain alcohol is 2-propanol, alkoxysilane is n-propyltriethoxysilane, and the aminoalkyl alkoxysilane is N-(3-(trimethoxysilylpropyl)-ethylenediamine or N-(3-(trimethoxysilylpropyl)-diethylenetriamine at a concentration of not more than 10% by volume and the n-octylamine is at a concentration between 0.2-1.0% v/v.

In another preferred embodiment, the product may additionally contain in its formulation functionalised silicon dioxide nanoparticles (i.e., chemically surface-modified with hydrophobic alkyl groups and/or amino-terminal groups) at a concentration of not more than 1% w/v.

A second aspect of the invention relates to the general process of preparing the product consisting of mixing all its components in a vessel. This mixture is homogenised by means of a water bath sonicator for at least 30 minutes. At this point the product is ready to be applied to the porous textile or ceramic substrate by means of common methods, such as immersion, spraying, brush or roller. In the event that the application is not immediate, the product must be packaged in a container that ensures its proper insulation against air humidity.

A third aspect of the invention relates to the method for activating and deactivating the hydrophilic and oil-repellent effect, upon contact with water, that the product is capable of producing on the material to which it is applied. The aminoalkyl alkoxysilane product has the ability to provide a response to external stimuli, in the case of the product object of the patent, against variations in pH or the presence of ions, causing a phenomenon of induced hydrophilia as a consequence of a pH balance by protonation-deprotonation of its amino groups, or else by forming complexes with transition metals. These chemical changes increase the polarity and surface energy of the coating as long as the N:C atomic ratio of the chain is sufficient (1:3 or higher) for the effect to predominate over the influence of the apolar alkyl chain. Thanks to this quality, it is possible to regulate the hydrophobia-hydrophilia or oil-repellent-oleophilic character of the surface in conditions of immersion under water. This phenomenon can be achieved by immersion or contact with a damp cloth of either an aqueous solution of controlled pH (in the range of pH 2 to 4 for protonation, causing hydrophilia, and 8 to 10 for deprotonation, causing hydrophobia) or of a metal salt, for example, Cu²⁺, Ag⁺ and/or Zn²⁺, in a varying concentration, between 0.025 and 1.0M.

A fourth aspect of the invention relates to particular uses of the product object of the invention. This product consists of a low viscosity sol and, therefore, can be applied by simple methods (immersion, spraying, brush, etc.), readily impregnating the fibrous structure of fabrics and porous ceramic materials. The mechanism of induced hydrophilia that can be generated in the material to which the product is applied gives it a reversible oil-repellent character, which facilitates the removal of any stain deposited on the surface thereof, while maintaining a protective effect against water and water-soluble agents. Moreover, by means of subsequent treatment with metal cations, the product produces on the material to which it is applied a reduced bioreceptivity with proven biocidal effect.

### DESCRIPTION OF THE FIGURES.

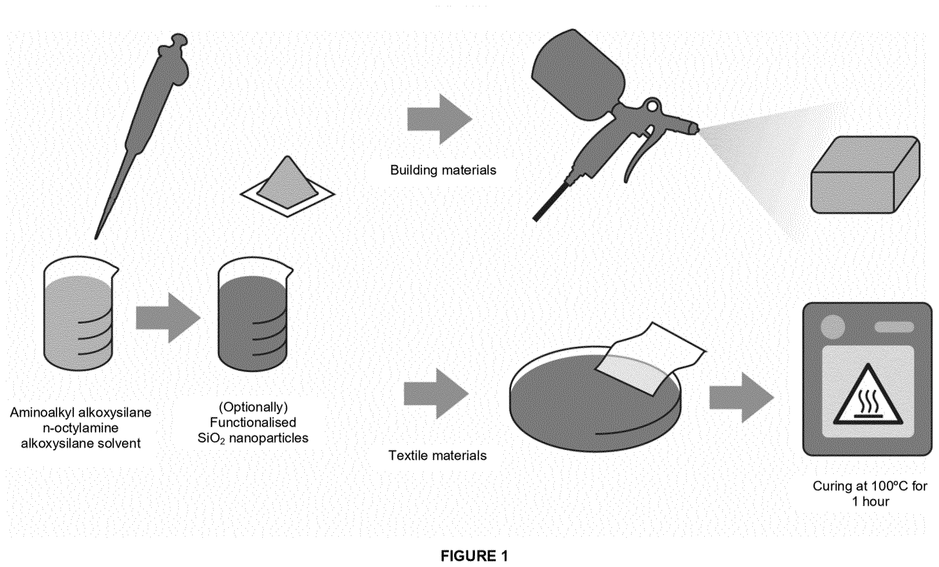

**FIGURE 1****.** Description of the synthesis process object of the patent.
**FIGURE 2****.** Variation in the static contact angle of a sample in the course of an abrasion test.
**FIGURE 3****.** Photographic and scanning electron microscopy images after completion of the test.
**FIGURE 4****.** Evolution of the static contact angle, in response to variations in pH, on two samples of cotton and polyester treated with the product object of the invention, ED 1:1 (N50), in successive steps of immersion and drying in a buffer solution at pH 2 and pH 10.
**FIGURE 5****.** Photographs of a textile treated with the product object of the patent, E (N200), in its hydrophobic/oleophilic (non-activated) state placed in the opening of a container containing water (stained with methylene blue) and chloroform (stained with rhodamine B), with a perfect separation of the phases due to the filtering surface being observed.
**FIGURE 6****.** Photographs of two polyester and cotton textiles treated with the product object of the patent, ED 9:1, in its hydrophobic/oleophilic (non-activated) state, and in its hydrophilic and oil-repellent state, in response to variations in pH, in conditions of immersion under water, with drops of chloroform, stained with rhodamine B, deposited on the surface.
**FIGURE 7****.** Evolution of the static contact angle, in response to the presence of ions, after successive steps of loading and unloading of copper(II) cations and variation in the total change in colour in the process.
**FIGURE 8****.** Transition from hydrophobia to hydrophilia of polyester fabrics treated by interaction with metal cations.
**FIGURE 9****.** Photographs and optical microscopy images of polyester textile samples 11 days after the start of a fungal colonisation assay.
**FIGURE 10****.** Quantification of ATP (pg) per unit area (m²) in polyester fabrics from the fungal colonisation assay and percentage inhibition of treatment, and loaded with different metal cations, with respect to the untreated control sample.

### EMBODIMENT OF THE INVENTION.

Next, and in order to illustrate in more detail the product object of the invention, results obtained at the laboratory scale are described. Specifically, Example 1 describes the synthesis of a product prepared according to the described method and its application on a polyester fabric (polyethylene terephthalate, 100%). Then, the evaluation of the efficacy of the applied product is described. In Example 2, the efficacy of the treatment set out in Example 1 is tested for response, by means of a mechanism of induced hydrophilia, to the presence of ions, reversing its surface behaviour alternately between hydrophobic and hydrophilic states.

### EXAMPLE 1

A product object of the invention, called E (N200), was prepared according to the following synthesis route: 2-propanol, an alkylalkoxysilane (n-propyltriethoxysilane, called PTEO, from Fluorochem), a non-ionic surfactant (n-octylamine from Sigma-Aldrich) and SiO₂ dioxide nanoparticles (NPs) (Aerosil 200 from Evonik) functionalised with PTEO and an aminoalkyl alkoxysilane (N-(3-(trimethoxysilylpropyl)-diethylenetriamine (TPD) from Sigma-Aldrich), were added sequentially to an organic solvent base. Lastly, the mixture was homogenised by ultrasound for 30 minutes. The proportions of 2-propanol, PTEO and n-octylamine were 90.6, 9 and 0.4% v/v, respectively. As for the functionalised SiO₂ NPs, they were added at a proportion of 1% by weight with respect to the total volume of the sol.

Multiple 4x4 cm polyester (PET type, 100%) samples are treated with the product described above in order to evaluate the efficacy and durability of the treatment. Viscosity values, gelling time, consumption, static contact angle and hysteresis are shown in Table 1.

**Table 1. Viscosity values, gelling time, product consumption, contact angle and hysteresis of the synthesised product.**

| Product | Viscosity (mPa·s) | Gelling time (h) | Consumption (g/m²) | Static contact angle (°) | Hysteresis (°) |
|---|---|---|---|---|---|
| E (N200) | 2.33 | < 24 | 266 ± 4 | 142 ± 4 | 12 ± 4 |

After the synthesis, the viscosity of the products was calculated at 25°C, with temperature being maintained with a recirculator, using a Brookfield concentric cylinder rotational viscometer (model DV-II+). The viscosity of the treatment of 2.33 mPa·s is similar to other alcohol-based surface products *(*Carrascosa, L. A. M., Facio, D. S. & Mosquera, M. J. Producing superhydrophobic roof tiles. Nanotechnology 27, (2016*)),* therefore being suitable for application by conventional methods.

The gelling time was determined by depositing about 10 ml of product in Petri dishes, which were exposed to air at room temperature (20°C), 40% RH). The product gels spontaneously, but not immediately, with a gelling time of less than 24 hours from product synthesis; the stability of the product in a closed container is more than one month.

Consumption (amount of product absorbed) was calculated by weighing the samples before and immediately after being treated. Consumption amounts to 266 grams per square metre of treated polyester, mainly associated with the volume of solvent used in the formulation of the product.

The static contact angle, as well as hysteresis, were determined using contact angle video measuring equipment. The observed static contact angle, in conjunction with a hysteresis close to 10° and a high water repellency indicate a superhydrophobic character of the treated surface caused by the formation of a Cassie-Baxter state.

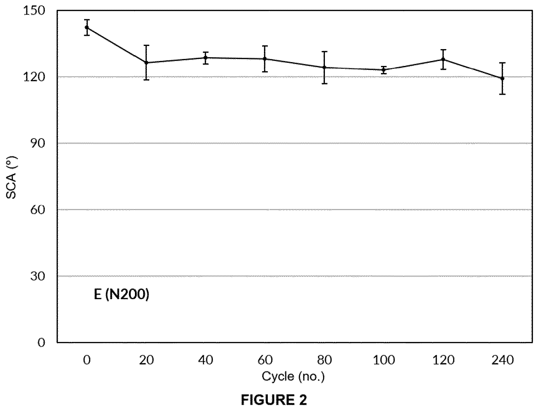

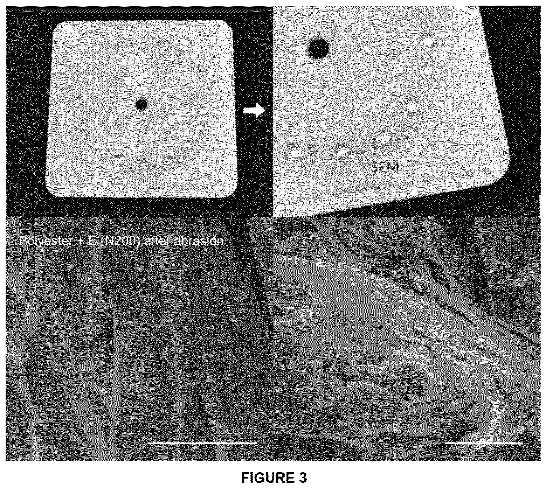

Next, the durability of the treatment was evaluated on a 10 x 10 cm polyester sample by means of an abrasion resistance test. To do so, a Taber Instruments model 5135 Abraser rotational abrasion tester was used. In the test, the sample was subjected to frictional wear by two grinding wheels covered with Taber S-33 sandpaper strips, consisting of finely divided aluminium oxide (360 FEPA grading) for 240 abrasive cycles. After the test (see Figure 2) the sample retained its hydrophobia, with a static contact angle of about 119°, despite considerable damage to its fibres, as can be observed in Figure 3, indicating a remarkable durability of the treatment in conditions of extreme abrasion.

### EXAMPLE 2

Two products were prepared with the compounds mentioned in Example 1, n-propyltriethoxysilane (called PTEO) and N-(3-(trimethoxysilylpropyl)-ethylenediamine (called TPD), these products being:
1. ED 9:1, with a relative proportion between the PTEO and TPD compounds of 9:1 in % v/v.
2. ED 1:1 (N50), with a relative proportion between the PTEO and TPD compounds of 1:1 in % v/v and with functionalised silicon dioxide NPs with the product TPD.

The products were prepared according to the following synthesis route: 2-propanol and the PTEO, TPD and n-octylamine compounds were added sequentially to an organic solvent base. Lastly, it was homogenised by ultrasound for 30 minutes. The proportions of 2-pentanol, PTEO, TPD and n-octylamine were 90.6, 9; 1 and 0.4% v/v, respectively, for the product 9:1 ED, and 90.6; 5; 5 and 0.4% v/v, respectively, for the product 1:1 ED (N50). Additionally, functionalised NPs were added to the product 1:1 ED (N50), at a proportion of 1% by weight, with respect to the total volume of the sol.

Multiple 4x4 cm polyester (PET type, 100%) and cotton (cellulose, 100%) fabric samples were treated with the products described above in order to evaluate the phenomenon of hydrophilia induced by response to variations in pH and the presence of ions.

The response to variations in pH was evaluated using three buffer solutions prepared in the laboratory: a first NaCl solution acidified with HCl and pH 2; a second acetic acid/acetate solution and pH 4; and a third bicarbonate/sodium carbonate solution and pH 10.

The response to variations in pH was evaluated using three solutions prepared in the laboratory; a first buffer solution is an NaCl solution acidified with acidic HCL at pH 2, prepared with hydrochloric acid from Honeywell Fluka and potassium chloride from Panreac; a second acidic buffer solution at pH 4, prepared with glacial acetic acid from Supelco and sodium acetate from Panreac AppliChem; and a third basic solution at pH 10, prepared with calcium carbonate from Honeywell Fluka.

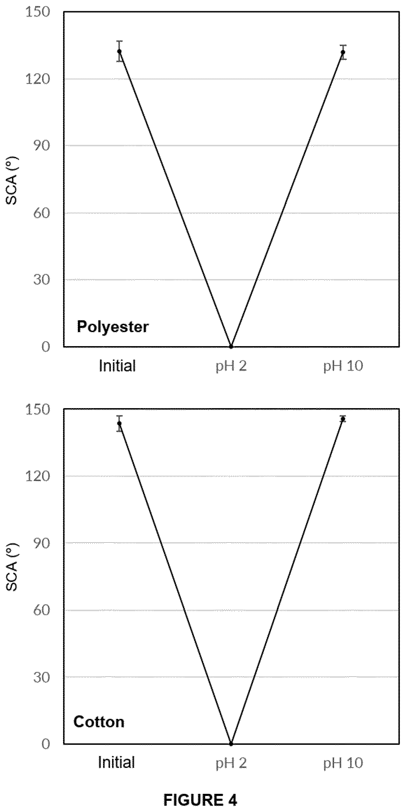

The change in the static contact angle (called SCA) of polyester and cotton textile samples treated with 1:1 ED (N50) after immersion and drying in the solutions at pH 2 and 10 described above was analysed. The result, shown in Figure 4, verified the response of the product to variations in pH, modifying the wetting properties of modified polyester and cotton fabrics, alternating between hydrophobic (SCA > 90°) and hydrophilic (SCA < 90°) behaviour.

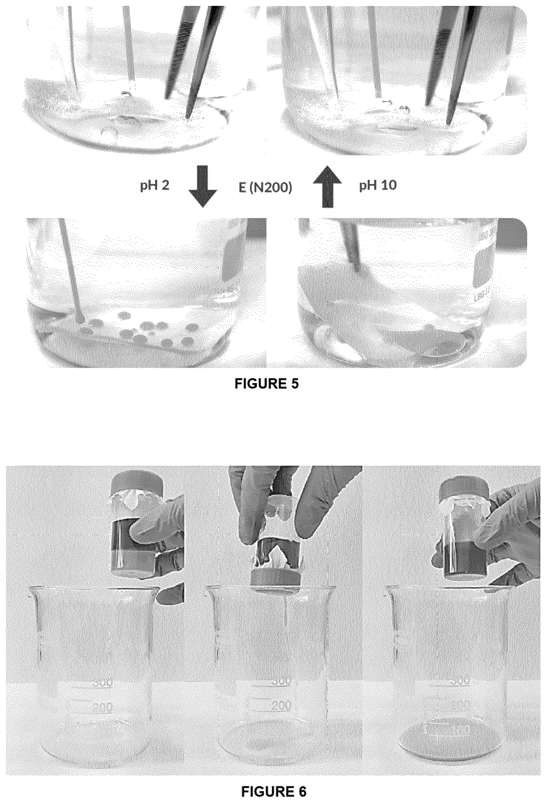

Subsequently, and in order to evaluate the modification of oil-repellent properties in conditions of immersion under water in response to these variations in pH, two polyester textile samples treated with the product 9:1 ED described above were taken, activating in one of them its hydrophilia by immersion in a buffer solution at pH 4, mentioned above, and, subsequently, by immersing both in deionised water and depositing drops of chloroform (stained with rhodamine B) on the surface thereof, as shown in Figure 5. The non-activated, hydrophobic textile showed an oleophilic behaviour, by formation of a Wenzel state of the oil droplet on the surface, while in contrast, the activated, hydrophilic textile showed an oil-repellent behaviour, by formation of a Cassie-Baxter state.

Given the ability of these modified textiles to alternate its behaviour between an oil-repellent and oleophilic character in conditions of immersion under water in response to variations in pH, the potential application thereof as a filtering surface for the separation of water/oil mixtures was studied. As can be observed in Figure 6, a non-activated, and therefore hydrophobic/oleophilic textile was able to effectively separate an immiscible mixture of chloroform (stained with rhodamine B) and water (stained with methylene blue), verifying the potential application thereof as a filter.

### EXAMPLE 3

In Example 3, the treatment described in Example 1 was applied to 4x4 cm polyester samples, in order to verify the interaction of the amino functional groups with different transition metal cations and how this can modify the wetting properties of the treated surface. To do so, 0.1 mol/L solutions of copper (II) sulphate pentahydrate from Honeywell Fluka, silver nitrate from Sigma Aldrich, zinc acetate from Panreac Applichem, and calcium nitrate tetrahydrate from Honeywell Fluka, were prepared. Subsequently, the following protocol was developed, using one of the cations, specifically, copper (II), in order to test the reversibility of the process of the response to the presence of ions:
1. A textile was immersed in a 0.1 mol/L solution of copper (II) sulphate as described above, in order to induce hydrophilia in the sample.
2. The textile was dried between two layers of filter paper, depositing a constant weight of about 2 kg, and, in addition, by means of a low-temperature heat gun at a distance of 20 cm from the sample, one minute per side.
3. The static contact angle (called SCA) was measured at this point, as was the change in colour, by means of a spectrophotometer colourimeter.

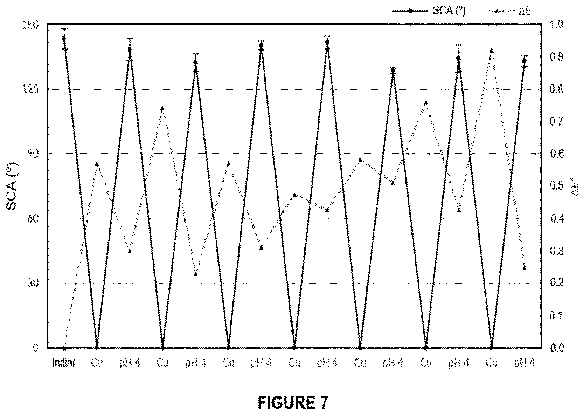

The complex formed between the amino groups and copper (II) cations produces an intense bluish colour; for this reason, the modification of the static contact angle with the change in colour was monitored using a Hunterlab ColorFlex model reflection spectrometer for solids, with the following conditions: illuminant D65, observer 10° and CIE L*a*b* standard, determining the total difference in colour (ΔE*). The SCA and ΔE* values are shown in Figure 7.

The treated tissue was observed to change its wetting properties, alternating between hydrophobia, by immersion and drying in a copper (II) sulphate solution, and hydrophilia, by immersion and drying in a buffer solution at pH 4, described in Example 2, in a consistent and reproducible manner between the different polyester samples treated. Likewise, the total change in colour between the different immersions in both solutions verified the formation of the complex by interaction with Cu²⁺ cations, and their subsequent release in acidic medium.

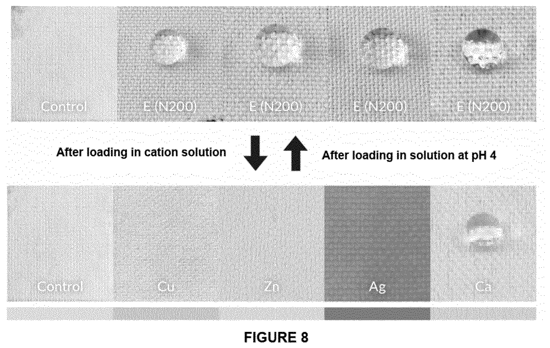

Subsequently, the possibility of using other ions in order to induce hydrophilia was checked; as can be observed in Figure 8, silver and zinc ions can promote the hydrophilic state of the surface, but this effect is not obtained by means of using calcium ions, probably related to low interaction with the amino groups in the treatment. The selective capture of these metal cations, and copper specifically being a potentially polluting heavy metal, the application of these fabrics as a filter for water decontamination is of particular interest.

### EXAMPLE 4

In Example 4, five 4 x 3 cm polyester textile samples were used: one untreated sample, as a control, and four samples treated with the product described in Example 1; activating hydrophilia in three of them following the protocol shown in Example 2, using copper, silver and zinc cations, which also have proven biocidal effect. Subsequently, environmental fungi were taken, scraped locally using sterile swabs, performing streak seeding on PDA medium plates without antibiotics, reseeding visibly colonised agar pieces from those areas where sporulation was observed on freshly prepared new PDA plates. Days later, a fungal type with morphological characteristics corresponding to the genus *Penicillium* was isolated, and then visibly colonised agar pieces were suspended in sterile 0.85% (NaCl) saline, filtering with a 0.45 µm pore size nylon syringe filter. Lastly, a surfactant, Tween 80 at 0.4% v/v, was added mainly in order to be able to wet the superhydrophobic surface of the non-activated treated fabric.

Fabric samples were inoculated by depositing 200 µl microdroplets and were then autoclaved at 25°C in a closed container in a humidity saturated atmosphere. Additionally, and after the first 5 days of the assay, a solution of anhydrous D-(+) glucose in saline (NaCl), from Panreac Applichem, at 1% w/v, was added to enhance growth.

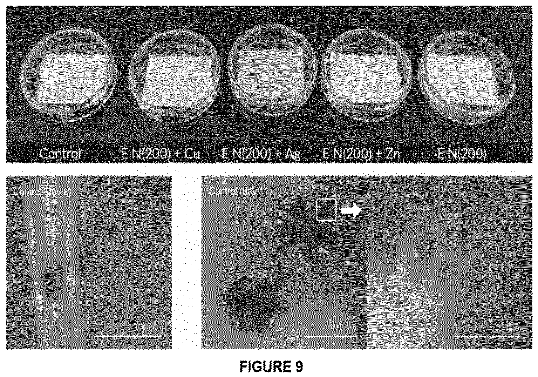

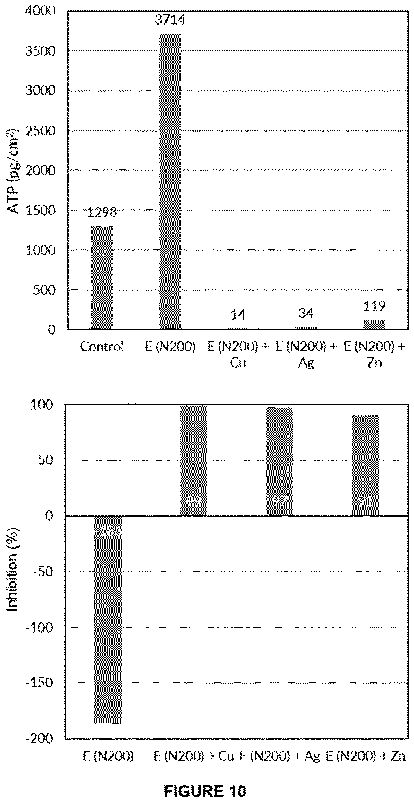

Photographs of the fabric 11 days after the start of the assay, as well as optical microscopy images are shown in Figure 9, and two graphs showing the quantification of ATP present in the fabric per unit area are shown in Figure 10. Only the untreated control sample showed visible fungal growth; however, the amount of ATP present per unit area was higher in the sample treated with product E (N200) due to a proliferation of bacteria, given the absence of antibiotics in the initial inoculum. Likewise, the marked decrease of ATP in the samples in those tissues loaded (after immersion and drying in solutions of these ions, as shown in Example 3) with metal cations, with proven biocidal effect, show the effectiveness of this treatment with the aim of reducing, in a non-selective manner, fungal and bacterial growth.

### INDUSTRIAL APPLICATION

The products object of the invention are applied as protective treatments on porous ceramic and textile materials. Specifically, it provides reversible hydrophobic and water-repellent (superhydrophobic) properties through a mechanism of induced hydrophilia, by means of the effect of variations in pH or interaction with transition metal cations which in turn generates oil-repellent properties in immersion under water. Likewise, a subsequent treatment with different metal cations with proven biocidal effect reduces the bioreceptivity of surfaces, generating antimicrobial surfaces.

Materials can be treated individually by immersion, or large areas can be covered with simple *in situ* application techniques such as spraying, brush, roller or any other method, with the polymerisation reaction and interaction with the substrate occurring spontaneously in a period of less than 48 hours, possibly being accelerated, where necessary, by means of heat treatment at 100°C for one hour.

## Claims

1. A product with reversible hydrophobic or superhydrophobic properties for coating porous textile and ceramic materials, consisting of a stable sol comprising:
- a short-chain alcohol (1 to 5 carbons), with a concentration between 50 and 90% vol/vol,
- an alkylalkoxysilane, with an aliphatic chain of between 3 and 20 carbons, with a concentration between 3.0 and 12.0% vol/vol,
- an aminoalkyl alkoxysilane, with a chain containing between 3 and 10 carbons and 1-4 nitrogens at an N:C ratio of at least 1:3, at a proportion of at least 5% vol/vol,
- a non-ionic surfactant, which is a primary amine, with a concentration between 0.2 and 1.0% vol/vol.

2. The product according to claim 1, wherein the solvent is 2-propanol at a concentration of not more than 90% by volume.

3. The product according to claim 1, wherein the alkylalkoxysilane is n-propyltriethoxysilane at a concentration of not more than 10% by volume.

4. The product according to claim 1, wherein the aminoalkyl alkoxysilane is N-(3-(trimethoxysilylpropyl)-ethylenediamine or N-(3-(trimethoxysilylpropyl)-diethylenetriamine at a concentration of not more than 10% by volume.

5. The product according to claim 1, wherein the non-ionic surfactant is n-octylamine with a concentration between 0.2-1.0% v/v.

6. The product according to claims 1 to 5, which may additionally contain in its formulation functionalised silicon dioxide nanoparticles at a concentration of not more than 1% w/v.

7. A method for obtaining the product with reversible hydrophobic or superhydrophobic properties according to claims 1 to 6, comprising the following steps:
a) mixing silica oligomer, aminoalkyl alkoxysilane and n-octylamine in the organic solvent;
b) dispersing the functionalised silicon dioxide nanoparticles on the compound of the previous step, in the case of wanting to provide the surface with a surface roughness that accentuates the wetting properties in its superhydrophobic or superhydrophilic character;
c) homogenising the mixture through ultrasound-assisted agitation.

8. A method for regulating the hydrophobic or superhydrophobic properties of the product for coating porous textile and ceramic materials according to the preceding claims, consisting of a mechanism of induced hydrophilia regulated by changes in pH and/or the presence of metal cations.

9. A method for activating a hydrophilic effect and an oil-repellent effect, upon contact with water, of a porous textile or ceramic material to which the product has been previously applied according to claim 8, consisting of performing a step of immersion in an acidic solution (pH < 5) and drying.

10. A method for reversing a hydrophilic effect and an oil-repellent effect, upon contact with water, of a porous textile or ceramic material to which the product has been previously applied according to claim 8, in which a step of immersion and drying in an acidic solution (pH < 5) has previously been performed, consisting of restoring its initial hydrophobic and oleophilic properties, upon contact with water, by means of immersion and drying in a basic solution (pH > 9).

11. A method for activating a hydrophilic effect and an oil-repellent effect, upon contact with water, of a porous textile or ceramic material to which the product has been previously applied according to claim 8, consisting of applying a step of immersion and drying in a solution of a transition metal cation with the ability to be complexed by the amino groups in the treatment.

12. A method for reversing a hydrophilic effect and an oil-repellent effect, upon contact with water, of a porous textile or ceramic material to which the product has been previously applied according to claim 8, in which a step of immersion and drying in a solution of a transition metal cation with the ability to be complexed by the amino groups of the treatment has previously been performed, consisting of restoring its initial hydrophobic and oleophilic properties, upon contact with water, by means of immersion and drying in an acidic solution (pH < 4).

13. Use of the product with reversible hydrophobic or superhydrophobic properties according to the preceding claims, to facilitate the removal of any stain deposited on the surface of the treated material, by activating its hydrophilia by means of performing a step of immersion and drying in an acidic solution (pH < 5) or in a solution of a transition metal cation, which gives it a reversible oil-repellent character, while maintaining a protective effect against water and water-soluble agents.

14. Use of the product with reversible hydrophobic or superhydrophobic properties according to the preceding claims for providing the treated surface with antimicrobial properties, activating its hydrophilia by means of performing a step of immersion and drying in a solution of Cu²⁺, Ag⁺ and/or Zn²⁺ salts in a varying concentration, between 0.025 and 1.0M.
